# EUROPÄISCHE PATENTSCHRIFT

(11) **EP 2 834 789 B1**
(45) Veröffentlichungstag und Bekanntmachung des Hinweises auf die Patenterteilung: **18.03.2020**
(21) Anmeldenummer: 13713165.2
(22) Anmeldetag: 27.03.2013
(51) Int. Cl.: G06T 7/00, A01J 5/017, G06T 7/73

(54) **VERFAHREN UND VORRICHTUNG ZUR OPTISCHEN BESTIMMUNG EINER POSITION UND/ODER ORIENTIERUNG EINES OBJEKTS IM RAUM**
METHOD AND DEVICE FOR OPTICALLY DETERMINING A POSITION AND/OR ORIENTATION OF AN OBJECT IN SPACE
PROCÉDÉ ET DISPOSITIF DE DÉTERMINATION OPTIQUE DE LA POSITION ET/OU DE L'ORIENTATION D'UN OBJET DANS L'ESPACE

(30) Priorität: 03.04.2012 DE 102012102915
(43) Veröffentlichungstag der Anmeldung: 11.02.2015
(73) Patentinhaber: GEA Farm Technologies GmbH, 59199 Bönen (DE)
(72) Erfinder: FEDORENKO, Sergey, Igorevitch, St. Petersburg 194355 (RU); KOROVIN, Konstantin, St. Petersburg 194021 (RU)
(74) Vertreter: Kleine, Hubertus
(86) Internationale Anmeldenummer: PCT/EP2013/056596
(87) Internationale Veröffentlichungsnummer: WO 2013/149916

(56) Entgegenhaltungen:
- WO-A2-2009/018538
- WO-A2-2009/018538
- WO-A2-2009/018538
- DE-A1- 3 742 867
- DE-A1- 3 742 867
- ANONYMOUS: "anyfeed SXM 100", INTERNET CITATION, 5. Januar 2012 (2012-01-05), Seite 1, XP002698807, Gefunden im Internet: URL:http://web.archive.org/web/20110930002 431/http://www.flexfactory.com/index.php?p age=anyfeed-sxm100 [gefunden am 2013-06-13]
- YIU C. SHIU ET AL: "Pose determination of cylinders, cones, and spheres from perspective projections", PROCEEDINGS OF SPIE, Bd. 1708, 1. März 1992 (1992-03-01), Seiten 771-782, XP055534442, 1000 20th St. Bellingham WA 98225-6705 USA ISSN: 0277-786X, DOI: 10.1117/12.58624 ISBN: 978-1-5106-2099-5
- Anonymus: "anyfeed SXM100", , 5. Januar 2012 (2012-01-05), Seiten 1-1, XP002698807, Gefunden im Internet: URL:http://web.archive.org/web/20110930002 431/http://www.flexfactory.com/index.php?p age=anyfeed-sxm100 [gefunden am 2013-06-13]
- AWCOCK G ED - HOWLETT R J ET AL: "Where is the intelligence in machine vision?", KNOWLEDGE-BASED INTELLIGENT ENGINEERING SYSTEMS AND ALLIED TECHNOLOGIE S, 2000. PROCEEDINGS. FOURTH INTERNATIONAL CONFERENCE ON BRIGHTON, UK 30 AUG.-1 SEPT. 2000, PISCATAWAY, NJ, USA,IEEE, US, Bd. 1, 30. August 2000 (2000-08-30), Seiten 25-32, XP010523055, DOI: 10.1109/KES.2000.885755 ISBN: 978-0-7803-6400-4
- ANONYMOUS: "anyfeed SXM 100", INTERNET CITATION, 5 January 2012 (2012-01-05), page 1, XP002698807, Retrieved from the Internet: URL:http://web.archive.org/web/20110930002 431/http://www.flexfactory.com/index.php?p age=anyfeed-sxm100 [retrieved on 2013-06-13]
- YIU C. SHIU ET AL: "Pose determination of cylinders, cones, and spheres from perspective projections", PROCEEDINGS OF SPIE, vol. 1708, 1 March 1992 (1992-03-01), pages 771-782, XP055534442, 1000 20th St. Bellingham WA 98225-6705 USA ISSN: 0277-786X, DOI: 10.1117/12.58624 ISBN: 978-1-5106-2099-5

## Beschreibung

Die Erfindung betrifft ein Verfahren und eine Vorrichtung zur optischen Bestimmung einer Position und/oder Orientierung einer Zitze eines milchgebenden Tiers im Raum anhand von Abbildungen mindestens einer Kamera.

Verfahren und Vorrichtungen zur optischen Bestimmung einer Position und/oder Orientierung von Objekten finden Anwendung insbesondere in der Robotersteuerung. Von einem Roboter zu greifende, zu bearbeitende oder anderweitig zu manipulierende Objekte sind bei manchen Anwendungen in ihrer Position und Orientierung im Raum nicht festgelegt oder haben zumindest einen großen Spielraum bezüglich ihrer Position und Orientierung innerhalb vorgegebener Grenzen. Um derartige Objekte gezielt automatisch manipulieren zu können, ist eine Objekterkennung, Positions- und ggf. Orientierungserkennung unabdingbar, die letztlich auf einer Bestimmung von Oberflächenkoordinaten des Objekts beruht. Dieses erweist sich als besonders schwierig, wenn die Form und Größe des Objekts nicht determiniert festliegt, sondern ihrerseits in gewissen Variationen unterliegen kann.

Ein Verfahren zur optischen Bestimmung einer Position und/oder Orientierung von Objekten ist aus der Druckschrift WO 2009/018538 A2 bekannt. Das Verfahren verwendet 2D- und 3D-Informationen, indem zunächst anhand eines 2D-Modells eines Objekts ein Objektbereich bestimmt wird und anschließend innerhalb des Objektbereichs anhand eines 3D-Referenzmodells ein gesuchtes Objekt und damit seine Position und Ausrichtung ermittelt wird. Das 3D-Referenzmodell ist dabei entweder als ein digitales Modell oder durch Abbildung eines Trainingsobjekts vorgegeben. Die Anwendung dieses Verfahrens setzt somit voraus, dass die Form des Objekts vorbekannt ist.

Besonders hohe Anforderungen an ein derartiges Verfahren oder eine Vorrichtung zur Bestimmung der Oberflächenkoordinaten eines Objekts im Raum ergeben sich, wenn Lebewesen als "Objekte" involviert sind. Bei Melkrobotern für Kühe oder andere milchgebende Tiere besteht beispielsweise die Aufgabe, einen oder mehrere Melkbecher an die Zitzen eines Milchtieres automatisch anzusetzen. Dabei ist die Position des Tieres ebenso wenig genau festlegbar wie die Position und/oder Orientierung der einzelnen Zitzen. Zudem variiert die Form und Größe und relative Anordnung der Zitzen zueinander individuell von Tier zu Tier.

Selbst wenn das Tier anhand von Identifikationsmerkmalen oder Vorrichtungen identifiziert wird, ändern sich zudem Details der Form und Größe der Zitzen abhängig von der Tageszeit, dem Gesundheits- und Ernährungszustand des Tieres und schließlich auch wachstums- bzw. alterungsbedingt. Eine zusätzliche Anforderung ergibt sich daraus, dass die Tiere während des Vorgangs des Ansetzens der Melkbecher üblicherweise nicht ruhig stehen, sondern ihre Position innerhalb eines Melkstands ändern können. Zusätzlich treten Bewegungen durch Atmen, Futteraufnahme oder Kauen bzw. Wiederkäuen auf. Um ein zuverlässiges Auffinden der Zitzen und Ansetzen der Melkbecher zu ermöglichen, ist daher eine möglichst schnelle Bestimmung ihrer Oberflächenkoordinaten im Raum gefordert, idealerweise in Echtzeit.

Aus der Druckschrift US 2006/019 64 32 A1 ist eine Vorrichtung zur Lokalisierung von Zitzen von Milchtieren für einen Melkroboter bekannt, bei dem anhand von Bildern von einer oder bevorzugt mehrerer Kameras mit Hilfe eines Kantendetektionsverfahren die Position der Spitzen von Zitzen aus den Bildern extrahiert wird. Insbesondere bei der Verwendung von zwei oder mehreren Kameras kann über Triangulationsmethoden die Position der Enden der Zitzen im Raum bestimmt werden.

Aus der Druckschrift WO 2010/023 121 A2 ist zur Bestimmung der Position von Zitzen eines Milchtieres bekannt, mithilfe einer Projektionseinrichtung ein Muster auf den Bereich des Tiereuters und der Zitzen zu projizieren, das dann von zwei Kameras unter Verwendung von Triangulationsmethoden ausgewertet wird. Die stereoskopische Auswertung des projizierten Musters ist geeignet Informationen über die dreidimensionale Oberflächenstruktur eines Objekts in Echtzeit zu liefern.

Weiterhin ist bei Melkrobotern der Einsatz weiterer Techniken, aus denen sich Informationen über die dreidimensionale Struktur gewinnen lassen, bekannt. Hier sind beispielsweise Ultraschall- oder auch Lichtlaufzeitmessungen (TOF - Time-of-Flight) zu nennen. Mit diesen Techniken ist jedoch ein hoher apparativer Aufwand notwendig, um eine hohe Genauigkeit der Ergebnisse zu erreichen.

Dennoch besteht Bedarf nach einem Verfahren und einer Vorrichtung der eingangsgenannten Art, mit denen die Position und ggf. die Orientierung einer Zitze eines milchgebenden Tiers im Raum schnell und präzise mit hoher Genauigkeit in allen Raumrichtungen bestimmt werden können.

Diese Aufgabe wird gelöst durch ein Verfahren und eine Vorrichtung mit den Merkmalen der unabhängigen Ansprüche.

Gemäß einem erfindungsgemäßen Verfahren erfolgt eine optische Bestimmung der Position und/oder Orientierung einer Zitze im Raum anhand von Abbildungen mindestens einer Kamera. Es wird mindestens eine 2D-Abbilddung der Zitze aufgenommen und es werden 2D-Konturinformationen aus der Abbildung extrahiert. Basierend auf den Konturinformationen wird zumindest ein Bereich der Zitze bestimmt. Weiter werden 3D-Informationen aus der mindestens einen oder einer weiteren 2D-Abbildung gewonnen. Von diesen 3D-Informationen wird eine Teilmenge ausgewählt, die innerhalb des bestimmten Bereichs der Zitze liegt. Es wird dann die Position und/oder Orientierung der Zitze anhand der ausgewählten Teilmenge der 3D-Informationen bestimmt.

Das Verfahren kombiniert so vorteilhaft 2D- und 3D-Informationen, die über die Zitze gewonnen werden. Die Kontureninformationen können aus den 2D-Abbildungen mit vergleichsweise geringem Rechenaufwand und entsprechend schnell und zuverlässig extrahiert werden. Sie dienen der Objekterkennung. Durch die Beschränkung der Auswertung der 3D-Informationen auf den erkannten Objektbereich wird eine Trennung von relevanten und im Hinblick auf die Zitze nicht relevanten 3D-Informationen erreicht. So können die gewonnenen 3D-Informationen effektiv zur Bestimmung der Position der Zitze, insbesondere im Hinblick auf die Distanz zur Kamera, und zur Bestimmung der Orientierung ausgewertet werden.

In vorteilhaften Ausgestaltungen des Verfahrens werden die 3D-Informationen aus 2D-Abbildungen von mindestens zwei beabstandeten Kameras stereoskopisch gewonnen und/oder werden aus 2D-Abbildungen mindestens einer Kamera bei Beleuchtung der Zitze durch einen Projektor zur Projektion eines Musters gewonnen. Bevorzugt wird dabei ein Linien-, Gitter-, Punkt- oder 2D-Positionscode-Muster verwendet. In beiden Ausgestaltungen ist eine Umsetzung des Verfahrens mit robusten und kostengünstigen optischen Geräten möglich.

Bei dem erfindungsgemäßen Verfahren wird aus den ermittelten Konturinformationen eine Konturlinie extrahiert, aus der ein Rotationskörper mit einer Hauptachse gebildet wird. Die Lage der Hauptachse im Raum wird so variiert, dass die gemessenen 3D-Informationen aus dem ausgewählten Bereich in Summe möglichst nah an einer Mantelfläche des Rotationskörpers liegen, wobei die Lage der Hauptachse die Orientierung der Zitze im Raum angibt. Bevorzugt wird ein Schnittpunkt des Rotationskörpers mit der Hauptachse bestimmt und als Position einer Spitze der Zitze im Raum ausgegeben. Unter der Annahme, dass sich die Zitze in guter Näherung in einem Modell als ein rotationssymmetrischer Körper darstellen lässt, ist so eine Auswertung der 3D-Informationen gegeben, die zu einer Bestimmung der Position und auch der Orientierung mit hoher Genauigkeit führt.

Eine erfindungsgemäße Vorrichtung zur optischen Bestimmung der Position und Orientierung einer Zitze im Raum weist mindestens eine Kamera auf und zeichnet sich dadurch aus, dass sie zur Durchführung des zuvor genannten Verfahrens eingerichtet ist. Es ergeben sich die im Zusammenhang mit dem Verfahren aufgeführten Vorteile.

In vorteilhaften Ausgestaltungen weist die Vorrichtung mindestens zwei beabstandete Kameras und/oder mindestens einen Projektor zur Projektion eines Linien-, Gitter-, Punkt- oder 2D-Positionscode-Musters auf.

Das zuvor genannte Verfahren dient der Bestimmung der räumlichen Position und Orientierung einer Zitze eines milchgebenden Tieres. Dabei ist die hohe Genauigkeit des Verfahrens und die schnelle Durchführbarkeit ebenso von Vorteil wie die Möglichkeit, das Verfahren mit robusten optischen Komponenten, wie Kameras und ggf. Projektoren, durchführen zu können. Entsprechend weist gemäß einem weiteren Aspekt der Erfindung ein Melkroboter eine zuvor genannte Vorrichtung auf.

Weitere vorteilhafte Ausgestaltungen und Weiterbildungen sind in den jeweiligen abhängigen Ansprüchen angegeben.

Die Erfindung wird nachfolgend anhand von Ausführungsbeispielen mithilfe von sechs Figuren näher erläutert. Die Figuren zeigen:
- Fig. 1: eine schematische Darstellung eines Ausschnitt eines Melkroboters beim Ansetzen von Melkbechern an Zitzen eines Michtieres;
- Fig. 2: eine schematische Darstellung eines Teil eines Melkroboters mit einer erfindungsgemäßen Vorrichtung;
- Fig. 3: eine schematische Darstellung von Konturinformationen, die im Verlauf eines erfindungsgemäßen Verfahrens gewonnen werden;
- Fig. 4: eine weitere schematische Darstellung von Konturinformationen;
- Fig. 5: eine Darstellung von 3D-Informationen, die im Verlauf eines erfindungsgemäßen Verfahrens ausgewertet werden und
- Fig. 6: eine weitere Darstellung von 3D-Informationen, die im Verlauf eines erfindungsgemäßen Verfahrens ausgewertet werden.

Das erfindungsgemäße Verfahren wird nachfolgend anhand einer Vorrichtung zur Erkennung der Position und Orientierung von Zitzen eines Milchtieres erläutert. Abstrakt formuliert besteht die Aufgabe bei einem Melkroboter darin, ein Werkzeug translatorisch und/oder rotatorisch in Relation zu einem Objekt, dessen Position im Raum erkannt werden muss, auszurichten. Diese Aufgabenstellung findet sich in vielen Anwendungsbereichen der Robotik wieder.

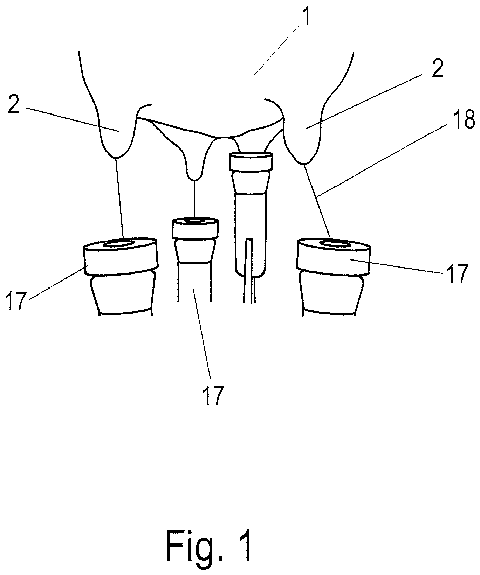

Fig. 1 verdeutlicht in einer perspektivischen Ausschnittszeichnung diese Aufgabenstellung für das gewählte Ausführungsbeispiel eines Melkroboters. Dargestellt ist ein Euter 1 eines milchgebenden Tieres, beispielsweise einer Kuh, mit vier Zitzen 2. Von einem hier nicht dargestellten Roboterarm werden Melkbecher 17 an das Euter 1 herangefahren, die dann nacheinander an die Zitzen 2 angesetzt werden. Dazu muss die Position der Spitzen der Zitzen 2 erkannt werden und die Bewegung der Melkbecher 17 entlang eines Verfahrwegs 18 so gesteuert und nachgeregelt werden, dass sich die Melkbecher 17 mit ihren Öffnungen von unten an die Spitzen der Zitzen 2 annähern, ohne dass die Zitzen 2 verfehlt oder zur Seite weggedrückt werden. Dabei können die Öffnungen der Melkbecher 17 mit Unterdruck beaufschlagt sein, sodass bei geeigneter Annäherung der Melkbecher 17 an die Spitzen der Zitzen 2 diese in die Öffnung eingesaugt werden. Aufgrund der Flexibilität der Zitzen 2 sind eine Orientierung der Melkbecher 17 im Raum und eine Anpassung an die Orientierung der Zitzen 2 im Raum nicht erforderlich. Diese kann ggf. aber vorgenommen werden. Jedoch sinkt bei schräg stehenden Zitzen die Ansetzwahrscheinlichkeit, ferner besteht Verletzungsgefahr des Tieres. Deshalb ist es vorteilhaft, wenn der Melkroboter Informationen über die Orientierung der Zitzen 2 erhält und die Positionierung der Melkbecher 17 entsprechend anpasst.

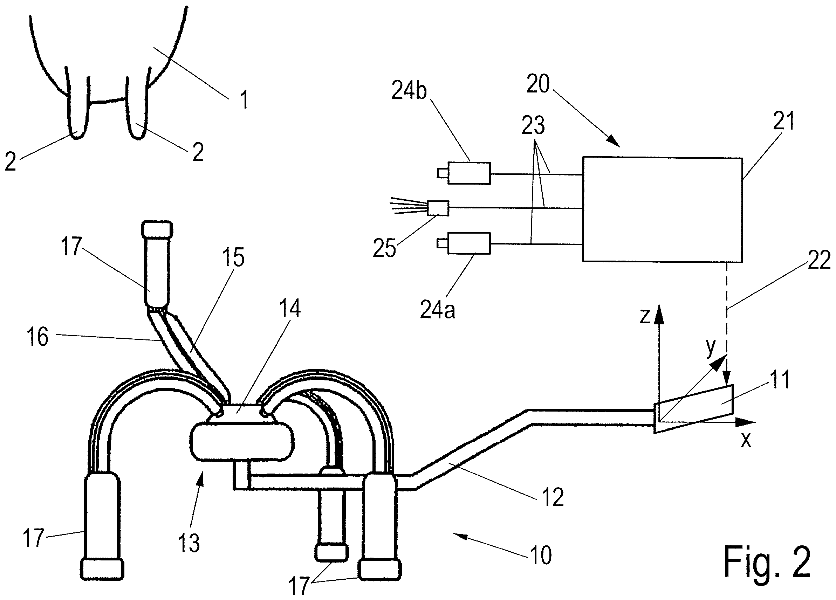

Fig. 2 zeigt ebenfalls in einer schematischen Darstellung den im Rahmen der Anmeldung relevanten Teil eines Melkroboters. Dieser umfasst eine Melkeinrichtung 10 sowie eine Vorrichtung 20 zum Erkennen der Position der Zitzen 2 sowie zur Ansteuerung der Melkeinrichtung 10.

Die Melkeinrichtung 10 weist einen mit Aktuatoren 11 gekoppelten Tragarm 12 auf, an dessen Ende Melkzeug 13 angeordnet ist. Die Aktuatoren 11 ermöglichen eine Bewegung des Tragarms 12 mit Freiheitsgeraden in mehreren Raumdimensionen.

Das von dem Tragarm 12 gehaltene und positionierte Melkzeug 13 weist einen Milchsammler 14 auf, der über Milchschläuche 15 und weitere Aktuatoren 16 jeweils mit Melkbechern 17 verbunden ist. Über die weiteren Aktuatoren 16 können die Melkbecher 17 beispielsweise jeweils von einer abgesenkten in eine angehobene Position bewegt werden. In der Fig. 2 befindet sich ein Teil der Melkbecher 17 in der abgesenkten Position und einer der Melkbecher 17 in der angehobenen Position. Die Aktuatoren 16 sind dabei mit elastischen Elementen ausgestattet, die eine Bewegung der Melkbecher 17 auch in der angehobenen Position gegeneinander ermöglichen. Auf diese Weise wird erreicht, dass durch eine Bewegung des Tragarms 12 ein anzusetzender Melkbecher positioniert und auf dem Verfahrweg 18 zur Spitze der Zitze 2 gebracht werden kann, auch wenn einer oder mehrere der anderen Melkbecher 17 bereits angesetzt sind.

Die Vorrichtung 20 dient der Steuerung der Aktuatoren 11 und der weiteren Aktuatoren 16 der Melkeinrichtung 10 zum Ansetzen der Melkbecher 17 an die Zitzen 2. Die Vorrichtung 20 umfasst dazu eine Bildverarbeitungs- und Steuereinrichtung 21, die nachfolgend als Steuereinrichtung 21 bezeichnet wird. Die Steuereinrichtung 21 weist einen oder mehrere Steuerausgänge 22 auf, über die sie mit der Melkeinrichtung 10 zur Betätigung ihrer Aktuatoren 11 und weiteren Aktuatoren 16 verbunden ist. Weiter weist die Steuereinrichtung 21 Datenanschlüsse 23 auf, über die sie mit optischen Geräten verbunden ist, die im Rahmen der Positionserkennung eingesetzt werden.

Im vorliegenden Ausführungsbeispiel werden als optische Geräte zwei Kameras 24a, 24b eingesetzt, die beabstandet voneinander auf den Bereich des Euters 1 ausgerichtet sind. Weiter ist ein Projektor 25 zur Projektion von Lichtstrukturen vorgesehen. Es wird angemerkt, dass die Kameras 24a, 24b und der Projektor 25 Beispiele für optische Geräte darstellen, mit denen das anmeldungsgemäße Verfahren ausgeführt werden kann. In alternativen Ausgestaltungen der Vorrichtung können alternative und/oder weitere optische Geräte eingesetzt werden. Grundsätzlich ist die Anzahl der Kameras und der Projektoren beliebig. Mehrere Kameras bzw. sequentiell betriebene Projektoren sind sinnvoll, wenn eine Gefahr der Abschattung, beispielsweise durch die Melkbecher, besteht. Insbesondere mehrere Projektoren sind diesbezüglich effektiv, da sie kostengünstig hergestellt werden können.

Zur Umsetzung des anmeldungsgemäßen Verfahrens weist die Steuereinrichtung 21 eine oder mehrere programmgesteuerte Prozessoren auf, darunter ggf. Grafikprozessoren und/oder digitale Signalprozessoren und oder FPGAs (Field Programmable Gate Arrays). Teile des Verfahrens können dabei softwareimplementiert sein, andere Teile, insbesondere zeitkritische oder rechenintensive Verfahrensschritte, können auch hardwareimplementiert sein.
Anhand der nachfolgend beschriebenen Figuren werden verschiedene Ausführungsbeispiele eines anmeldungsgemäßen Verfahrens zur Bestimmung von Oberflächenkoordinaten eines Objekts im Raum näher beschrieben, wobei auf die Vorrichtung der Fig. 2 Bezug genommen wird. Im Folgenden verwendete Bezugszeichen beziehen sich daher u. a. auch auf die Fig. 2.

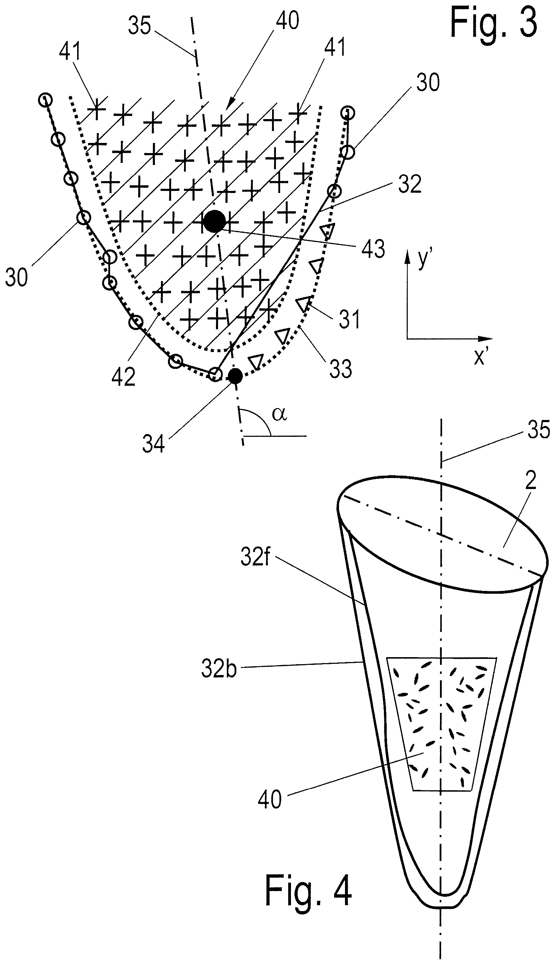

Fig. 3 illustriert ein erstes Ausführungsbeispiel des erfindungsgemäßen Verfahrens. Es wird davon ausgegangen, dass zunächst eine der beiden Kameras 24a oder 24b ein Abbild des Euters 1 bereitstellt, das unter bestimmten vorgegebenen Lichtbedingungen, beispielsweise bei Vorliegen einer Gegenlichtsituation aufgenommen wird. Eine solche Gegenlichtsituation, auch "Backlight" genannt, kann beispielsweise dadurch erzielt werden, dass eine von der Position der Kamera 24a, 24b aus gesehen auf der gegenüberliegenden Seite des Tieres befindliche Begrenzungswand eines Melkstands von einer Lichtquelle beleuchtet wird. Es sind jedoch Beleuchtungssituationen denkbar, in denen eine Beleuchtung von der Kameraseite her erfolgt ("Frontlight") oder bei denen eine diffuse Beleuchtung von mehreren Seiten genutzt wird. Aus Gründen der einfacheren Darstellung wird zunächst von einer Backlight-Situation ausgegangen. Eventuell vorzunehmende Korrekturen bei der Auswertung beim Vorliegen einer anderen Beleuchtungssituation werden im Zusammenhang mit der Fig. 4 erläutert.

Das Kamerabild der Kamera 24a oder 24b wird nachfolgend auch als 2D-Abbildung bezeichnet, da davon ausgegangen wird, dass dieses Kamerabild keine Distanzinformationen enthält, sondern eine Abbildung des aufgenommenen Objekts, hier also des Euters 1, auf eine zweidimensionale Projektionsfläche darstellt. Es wird angemerkt, dass auch Abbildungen mit Distanzinformation der 2D-Abbildung zugrunde liegen können - die Distanzinformationen werden für die zunächst vorgenommene Auswertung der 2D-Abbildung nicht benötigt und können daher in diesem Schritt ignoriert werden.

Aus der 2D-Abbildung werden Konturinformationen gewonnen. Konturinformationen können beispielsweise aus Grauwert und/oder Farbunterschieden zwischen benachbarten Bildpixeln extrahiert werden. Zu diesem Zweck sind verschiedene Algorithmen bzw. Filterfunktionen bekannt, die im Rahmen dieser Anmeldung verwendet werden können. Beispiele sind die sogenannte "Canny Edge Detection" oder der "Kruskal's Algorithm".

Die Konturpunkte werden dann gruppiert und verschiedenen Objekten zugeordnet, wobei die Gruppierung und Zuordnung aufgrund vorgegebener Grundgeometrien und Abmessungen der relevanten Objekte, hier also der Zitzen 2, beruht. Eine Vorgabe kann beispielsweise darin bestehen, dass als relevante Objekte nur solche Objekte angesehen werden, die als im Wesentlichen zylindersymmetrische Objekte angenommen werden können. Oder anders ausgedrückt werden solche Objekte, deren Konturen nicht zu denen eines zylindersymmetrischen Objekts passen, nicht weiter betrachtet.

Fig. 3 zeigt eine Mehrzahl von ermittelten Konturpunkten 30 (runde Symbole), die einem relevanten Objekt zugeordnet sind. Die ermittelten Konturpunkte 30 sind durch eine Konturlinie 32 verbunden. Dargestellt ist die Lage der ermittelten Konturpunkten 30 sowie der Konturlinie 32 in der Bildebene der 2D-Abbildung. Diese wird nachfolgend auch als x'y'-Ebene bezeichnet, wobei x' eine horizontale Raumrichtung und y'eine vertikale Raumrichtung angibt. Es ist zu beachten, dass die x'- und y'-Koordinaten die Projektion auf die Bildebene betreffen und keine Koordinaten des Objekts im Raum angeben. Zur Unterscheidung werden x' und y' als Bildkoordinaten bezeichnet. Sie sind von realen Objektkoordinaten zu unterscheiden, die nachfolgend als x-, y, und z-Objektkoordinaten bezeichnet werden.

Die durch Verbindung der ermittelten Konturpunkte 30 entstandene ermittelte Konturlinie 32 gibt jedoch nicht zwingend und in der Realität nur in den seltensten Fällen die vollständige Kontur des entsprechenden Objekts wieder. Teile des Objekts können in der 2D-Abbildung verdeckt sein oder sich aufgrund der Beleuchtungssituation nicht von weiter im Hintergrund liegenden Elementen absetzen. Im vorliegenden konkreten Anwendungsbeispiel sind betrachtete Zitzen 2 häufig von weiteren Zitzen 2 oder anderen Teilen des Euters 1 oder einem Teil eines Beins oder des Schwanzes des Tieres verdeckt.

Im dargestellten Beispiel der Fig. 3 ist eine solche Verdeckung ursächlich für den großen Abstand zweier benachbarter ermittelter Konturpunkte 30 im rechten unteren Bereich der Figur. Die in diesem Bereich fehlenden Konturpunkte sind in der Figur als vermutete Konturpunkte 31 eingezeichnet. Fehlende Konturpunkte erschweren das Zuordnen von ermittelten Konturpunkten 30 zu einem Objekt. Um dennoch eine Objektzugehörigkeit feststellen zu können, kann vorgesehen sein, die ermittelten Konturpunkte 30 mit einem Modell des erwarteten Objekts, also vorliegend einem Modell der Zitzen 2 zu vergleichen. In der Regel genügt ein Modell. Grundsätzlich ist es jedoch auch möglich, mehrere Modelle parallel einzusetzen.

Das Modell basiert auf einer Vielzahl von gemessenen Objektkonturen, die zunächst auf gleiche Größe skaliert werden. Zur Skalierung kann eine gemessene charakteristische Objektgröße, beispielsweise eine Länge oder ein mittlerer Durchmesser oder ein Durchmesser in der Mitte (auf die Länge bezogen) des Objekts herangezogen werden. Aus einer Vielzahl von derart skalierten und überlagerten Objektkonturen wird ein Histogramm erstellt, das eine Häufigkeitsverteilung wiedergibt, mit der an einer entsprechender Stelle bei einem gleichermaßen skalierten 2D-Abbild eines Objekts ein Konturpunkt beobachtet wird. Der einfacheren Handhabbarkeit halber kann das Histogramm in eine Tabelle konvertiert werden, in der die Häufigkeitsverteilung von Konturpunkten in Abhängigkeit eines normierten Radius oder Durchmessers des Objekts und einer normierten Länge angegeben ist.

Mithilfe dieser Tabelle oder einer aus ihr abgeleiteten äquivalenten analytischen Funktion gewonnen aus einer Parametrisierung der Tabellenwerte kann abgeschätzt werden, mit welcher Wahrscheinlichkeit eine Gruppe von ermittelten Konturpunkten 30 zum gleichen als zylindersymmetrisch angenommenen Objekt gehören. Falls die Wahrscheinlichkeit einen vorgegebenen Schwellenwert übersteigt, wird eine Zugehörigkeit der ermittelten Konturpunkte 30 zu einem Objekt angenommen.

In einem nächsten Schritt wird die Gruppe der ermittelten Konturpunkte 30, die einem Objekt zugeordnet sind, durch eine Modellkonturkurve angenähert. Diese Modellkonturkurve ist als berechnete Konturlinie 33 in Form einer punktierten Linie in der Fig. 3 wiedergegeben. Für das Anwendungsbeispiel der Erkennung der Zitzen 2 hat sich gezeigt, dass ein Polynom mit ausschließlich geraden Koeffizienten eine geeignete Modellkonturlinie darstellt. Im Beispiel der Fig. 3 ist die rechte Konturlinie 33 ein solches Polynom sechster Ordnung. Es kann dabei auch ein Polynom einer anderen, ggf. höheren Ordnung angesetzt werden. Die Ordnung des Polynoms bestimmt den minimalen Krümmungsradius bei der Beschreibung der Kontur. Nicht benötigte höhere Koeffizienten werden unter Umständen bei der Anpassung automatisch ausgeblendet, da ihr Betrag als Null oder so klein ermittelt wird, dass sie faktisch unbedeutend sind. Die berechnete Konturlinie 33 weist einen Scheitelpunkt 34 und eine Symmetrie- oder Hauptachse 35 auf.

In der Ebene der 2D-Abbildung, also in der x'y'-Ebene führt die vorgenommene Auswertung der 2D-Abbildung aufgrund der involvierten Plausibilisierung der Objektzugehörigkeit von ermittelten Konturpunkten 30 sowie der Anpassung durch die Modellkonturlinie zu einer sehr genauen Bestimmbarkeit des Extremums 34 und der Hauptachse 35. Es ist Aufgabe der nun folgenden Verfahrensschritte, zu den bis hierher gewonnenen Informationen, die sich in der lateralen Lage der Hauptachse 35 und des Scheitelpunkts 34 widerspiegeln, noch eine Distanzinformation über die Position des Scheitelpunktes 34 in der einer zur x'y'-Ebene senkrechten z-Richtung zu ermitteln und eine Neigung (Verkippung) der Hauptachse 35 gegenüber der x'y'-Ebene zu bestimmen.

Neben der Möglichkeit, eine 2D-Abbildung zu generieren, weist die anmeldungsgemäße Vorrichtung weiter die Möglichkeit auf, Abbildungen mit einer Distanzinformation bereitzustellen. Solche Informationen, die im Folgenden abkürzend auch als 3D-Informationen bezeichnet werden, können dabei auf verschiedene Art und Weise gewonnen werden. Dabei kann die laterale Auflösung, mit der diese 3D-Informationen bereitgestellt werden, von der Auflösung der 2D-Abbildung abweichen.

Beim Aufbau der Fig. 2 sind zur Generierung von 3D-Informationen beispielsweise die beiden beabstandet voneinander montierten Kameras 24a, 24b vorgesehen. Mithilfe von Abbildungen beider Kameras 24a, 24b können über stereoskopische Verfahren, beispielsweise Triangulation, 3D-Informationen erhalten werden. Dazu ist ergänzend der Projektor 25 vorgesehen, der ein strukturiertes Lichtmuster, beispielsweise ein Gitter- oder Linien- oder Punktmuster auf das Objekt projiziert, wobei die 3D-Informationen aus einer Analyse der stereoskopischen Aufnahme des projizierten Musters gewonnen werden.

Weiterhin können Muster verwendet werden, bei denen Koordinaten einzelner Strukturelemente (Musterelemente) aus dem Abbild des Musters gewonnen werden können. Solche Muster können in Form eines Positionscodes oder anderweitig gelabelter Punktwolken (Farbe, Formen, Helligkeit) dargestellt werden. Die zusätzliche Information wird zum schnellen lösen des Korrespondenzproblems, also der Zuordnung von Abbildungselementen ("Messstrahlen") zu realen Oberflächen, genutzt. Solche Muster werden im Rahmen der Anmeldung als 2D-Positionscode-Muster bezeichnet. Mithilfe von 2D-Positionscode-Mustern können 3D-Informationen mithilfe nur einer Kamera 24a oder 24b gewonnen werden. Die erreichbare Lateralauflösung ist bei 2D-Positionscode-Mustern hoch genug, um eine Abbildung mit Beleuchtung durch das projizierte 2D-Positionscode-Muster als 2D-Abbildung einzusetzen, die der Konturenbestimmung zugrunde liegt.

Alternativ können andere bekannte bildgebende Verfahren, die 3D-Informationen bereitstellen können, verwendet werden, beispielsweise Lich-Laufzeitverfahren (TOF).

Erfindungsgemäß wird eine Teilmenge der bereitgestellten 3D-Informationen ausgewählt, um Oberflächenkoordinaten eines Objekts im Raum und damit letztlich die Position und Orientierung zu ermitteln. Dabei basiert die Auswahl der Teilmenge der 3D-Informationen auf den zweidimensionalen Konturinformationen, die zuvor aus dem 2D-Abbild des Objekts gewonnen wurden. Ausgehend von der berechneten Konturlinie 33 wird zu diesem Zweck ein flächiger Bereich 40 ausgewählt. In nachfolgenden Auswerteschritten werden nur solche 3D-Informationen berücksichtigt, die innerhalb des ausgewählten Bereichs 40 liegen. In der Fig. 3 sind innerhalb des ausgewählten Bereichs 40 liegende und zur Verfügung stehende 3D-Messpunkte 41 eingetragen. Die 3D-Messpunkte 41 zeichnen sich durch 3 Koordinaten aus, zwei Lateralkoordinaten und eine Koordinate, die die Distanzinformation enthält. Die 3D-Messpunkte 41 sind an ihren jeweiligen lateralen Koordinaten eingetragen, die Distanzinformation ist in der in der Figur nicht dargestellt. Üblicherweise sind die 3D-Informationen in Form von Kugelkoordinaten angegeben. Die Lateralkoordinaten sind üblicherweise Winkelkoordinaten, die Distanzinformation eine Information über einen gemessenen Abstand z' von der Kamera zur Oberfläche des Objekts. Die Winkelkoordinaten sind mit den x'y'-Koordinaten der 2D-Abbildung korreliert.

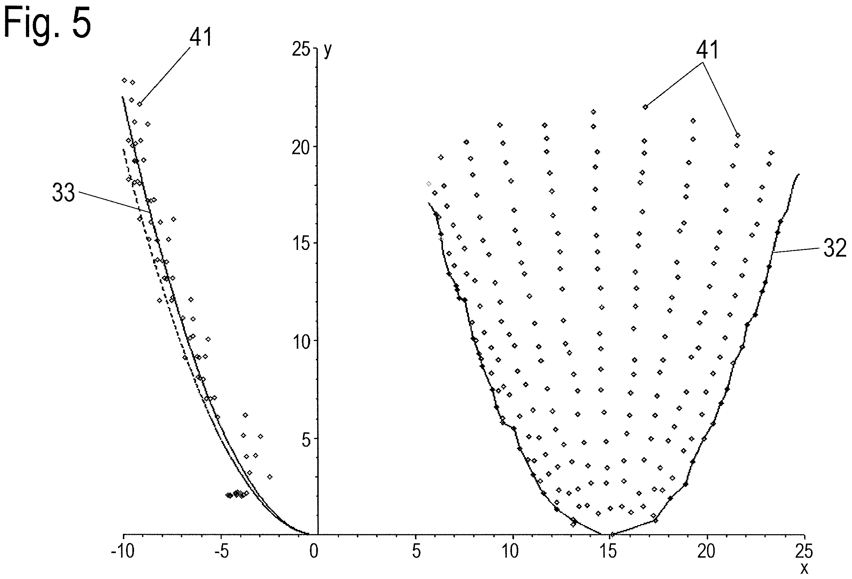

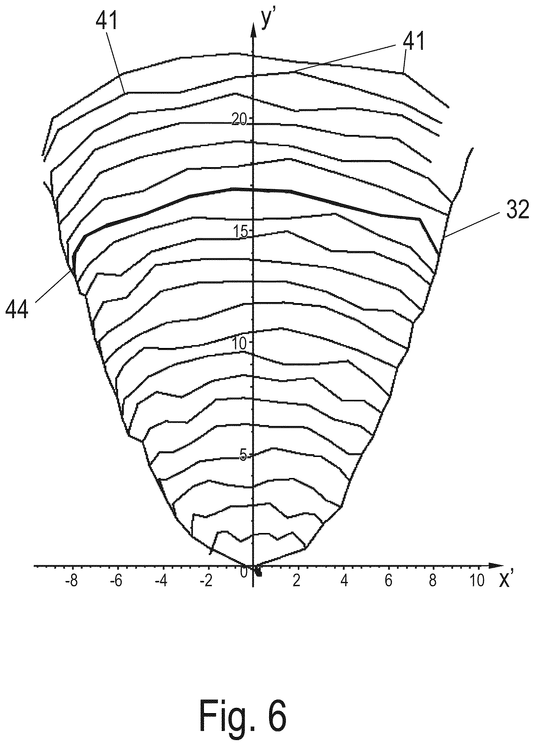

Die weitere Auswertung der 3D-Messpunkte 41 wird nachfolgend anhand der Fig. 5 und 6 näher erläutert. Der ausgewählte Bereich 40 erstreckt sich im Beispiel der Fig. 3 nicht bis an die berechnete Konturlinie 33. Stattdessen ist eine Bereichsgrenze 42 anhand der berechneten Konturlinie 33 bestimmt worden, die von der berechneten Konturlinie 33 beabstandet ist. Der Grund hier ist, dass für das Objekt eine zylindersymmetrische Struktur angenommen wird. Die z-Komponenten von Oberflächenkoordinaten der Objektoberfläche ändern sich beim Annähern an die berechnete Konturlinie 33 stark. Da der entsprechende Gradient Δz/Δx bzw. Δz/Δy im Bereich der berechneten Konturlinie 33 eine Polstelle aufweist, weisen Distanzinformationen aus diesem Bereich mit hoher Wahrscheinlichkeit keine hohe Genauigkeit auf und sind für eine weitere Auswertung ungeeignet. Der Ausschluss des Randbereichs des Objekts im Bereich der berechneten Konturlinie 33 verhindert die Berücksichtigung solcher vermutlich ungenauen Messpunkte bei der weiteren Auswertung.

Fig. 4 verdeutlicht ein Problem, das bei der Konturenbestimmung auftritt, wenn eine andere Beleuchtungssituation als die Backlight-Situation eingesetzt wird. In der Fig. 4 ist schematisch perspektivisch die Spitze einer Zitze 2 dargestellt. Es ist eine ermittelte Konturlinie 32b, aufgenommen in einer Backlight-Beleuchtungssituation wiedergegeben. Es wird davon ausgegangen, dass keine Verdeckung oder Ähnliches vorliegen. Die ermittelte Konturlinie 32b entspricht dann im Wesentlichen der Projektion des tatsächlichen äußeren Randes der Zitze 2 auf der x'y'-Ebene der 2D-Abbildung, aus der die Konturlinie 32b bestimmt ist.

Wird dagegen eine andere Beleuchtungssituation gewählt, hier beispielhaft eine Frontlight-Situation, ergibt sich eine ermittelte Konturlinie 32f, die innerhalb des von der ermittelten Konturlinie 32b umschriebenen Bereichs liegt. Der Grund ist, dass bei einer Beleuchtungssituation aus der Richtung, in der die Kamera positioniert ist, in Bereichen, in denen ein sehr flacher (streifender) Lichteinfall vorliegt, nur wenig Licht zurück reflektiert wird. Gemäß dem Lambert'schen Gesetz ist die Winkelverteilung der Intensität von Licht, das von einem Flächenelement abgestrahlt wird, proportional zum Kosinus des Betrachtungswinkels. Das Lambert'sche Gesetz gilt hier sowohl für die Beleuchtungsals auch für die Betrachtungssituation. Es ergibt sich somit eine Abhängigkeit vom Quadrat des Kosinus des Betrachtungswinkels. Der Betrachtungswinkel geht im Bereich des Randes der Zitze 2 bei der ermittelten Konturlinie 32b gegen 90°, der Kosinus somit gegen Null. Eine auf Kontrasten basierenden Kantendetektion findet einen Schwellenwert für eine Kante dann nur bei weniger streifendem Lichteinfall, bei dem das Quadrat des Kosinus des Einfallswinkels deutlich größer als Null wird. Eine solche Situation ist aufgrund der in etwa zylindersymmetrischen Geometrie der Zitze 2 weiter in Richtung ihrer Mitte gegeben.

Wenn zur Bestimmung der Konturen eine von der Backlight-Beleuchtungssituation unterschiedliche Beleuchtungssituation gewählt wird, kann jedoch durch vorab vorgenommene Referenz Messungen, die bei beiden Beleuchtungssituationen vorgenommen werden, abhängig von der Größe der betrachteten Zitze 2 eine Korrelation zwischen ermittelten Konturlinien für unterschiedliche Beleuchtungssituationen festgestellt werden. Aus dieser kann eine Korrekturrvorschrift abgeleitet werden, die ermöglicht, eine beispielsweise bei einer Frontlight-Belichtungssituation aufgenommene Korrekturlinie 32f in eine Korrekturlinie umzurechnen, die die tatsächlichen Abmessungen der Zitzen 2 möglichst korrekt wiedergibt.

In Fig. 5 ist die weitere Auswertung der 3D-Information dargestellt. Zunächst werden die 3D-Messpunkte 41 von Kugelkoordinaten in kartesische Objektkoordinaten x, y, z umgerechnet. Dann wird ein Schwerpunkt 43 (vgl. Fig. 3) der 3D-Messpunkte 41 gebildet. In einer ersten Näherung wird angenommen, dass die Hauptachse 35 (vgl. Fig. 3) der Modellkontur durch diesen Schwerpunkt 43 verläuft. Unter dieser Annahme kann auch die Modellkontur, also die berechnete Konturlinie 33, von den Bildkoordinaten x', y' in reale Objektkoordinaten x,y und z umgerechnet werden. Auch die (vorläufige) Position des Scheitelpunkts 34 kann in Objektkoordinaten umgesetzt werden. Die Richtung der Hauptachse 35 wird nachfolgend über zwei Winkel α und β angegeben. Der Winkel α beschreibt eine Verdrehung der Hauptachse 35 in der x'y'-Ebene der 2D-Abbildung. Dieser Winkel α konnte bereits aus den 2D-Abbildungen bestimmt werden. Er kann im Folgenden als bekannt angenommen werden. Alternativ ist eine Korrektur seines Wertes anhand der Auswertung der 3D-Informationen möglich. Der Winkel β beschreibt eine Verkippung der Hauptachse 35 gegenüber der x'y'-Ebene der 2D-Abbildung und wird nachfolgend als Verkippungswinkel β bezeichnet.

Unter der bereits zuvor angenommenen Voraussetzung, dass die Zitze 2 annähernd zylindersymmetrisch ist, ist ihre Oberflächenkontur durch einen Rotationskörper der Modellkontur, also der berechneten Konturlinie 33, beschreibbar. Es wird nun in einem Optimierungsprozess die Position des Rotationskörpers im Raum so variiert, dass die 3D-Messpunkte 41 möglichst gut auf der Mantelfläche des berechneten Rotationskörpers liegen. Zunächst werden dazu die 3D-Messpunkte 41 und das Modell in ein einheitliches (kartesisches) Koordinatensystem transformiert. Anschließend werden die Modellparameter so verändert, dass das Modell mit bestmöglicher Qualität die 3D-Messpunkte 41 beschreibt. Als Kriterium wird zweckmäßig die Summe der Abstandsquadrate der Abstände der 3D-Messpunkte 41 von der Oberfläche des Modells betrachtet. Ziel der Berechnung ist die Suche nach einem absoluten Minimum des Kriteriums. Hierzu werden folgende Parameter verändert: eine Translation des Scheitelpunkts 34 um einen Verschiebungsvektor Δx, Δy, Δz und eine Rotation der Hauptachse 35 um die Winkel α und β. Es wird also eine mehrdimensional Funktion des Kriterium untersucht, um das absolute Minimum zu finden.

Dieser Prozess wird als "Matching" mit einem "parametrischen Modell" bezeichnet. Das Modell selbst kann sich dabei ändern, z.B. kann sich die Größe der Zitzen und ggf. auch ein Formparameter, z.B. der Durchmesser, durch Anschwellen zu Beginn des Melkprozesses ändern. Aus diesem Grund kann das Modell selbst geringfügig angepasst werden.

Insbesondere können in dem Matching-Prozess die zuvor nicht oder nur mit unzureichender Genauigkeit bestimmten ermittelnden Parameter, der Verkippungswinkel β und der Abstand des Scheitelpunkts 34 von der Kamera mit hoher Genauigkeit ermittelt werden.

In der linken Hälfte der Abbildung der Fig. 5 ist das Ergebnis des Optimierungsprozesses dargestellt. Zu diesem Zweck sind die 3D-Messpunkte 41 auf die dem Rotationskörper zugrunde liegende berechneten Konturlinie 33 projiziert. Durch den Matching-Prozess sind die Modellparameter bekannt. Aufgrund möglicher Artefakte kann abschließend eine Prüfung der Extrapolation erfolgen. Hierzu werden die 3D- Messpunkte 41 um die Rotationsachse der Zitzen gedreht. Durch Lösen der Transformationsgleichung für z'=0 bestimmt man die Spuren der 3D-Messpunkte 41 in der x'y'-Ebene. Diese Punkte werden auf diese Weise auf die ebenfalls vorliegende 2D- Kontur gemappt (projiziert). In der Praxis verbleibt ein Fehler, der für Sicherheitsprüfungen zur Verfügung steht. An dieser Stelle können Korrekturen durch verfahrensbedingte Messfehler, beispielsweise durch verschobene Konturen (z.B. bei fehlender Backlight-Beleuchtung) realisiert werden.

Beim vorliegenden Beispiel zeigt sich, dass die Lage der 3D-Messpunkte 41 gut durch die Mantelfläche des Rotationskörpers beschrieben wird. Aus einer statistischen Auswertung der verbleibenden Abständen oder Abstandsquadrate zwischen den 3D-Messpunkten 41 und der Oberfläche des Rotationskörpers kann eine Aussage über die Genauigkeit, mit der die Position und die Verkippung des Rotationskörpers bestimmt sind, erfolgen. Gegebenenfalls kann vorgesehen sein, auch eine Variation des Winkels α im Optimierungsprozess zuzulassen.

Als Ergebnis steht am Ende des Optimierungsprozesses die Position des Scheitelpunkts 34 sowie die Richtung der Hauptachse (Winkel α, β) fest. Weiterhin können Oberflächenkoordinaten des Rotationskörpers angegeben werden. Die ermittelten Daten werden ausgegeben und zur Steuerung eines Roboters verwendet werden. Im Beispiel der Fig. 2 werden sie zur Steuerung der Aktuatoren 11 und der weiteren Aktuatoren 16 genutzt, um einen Melkbecher 17 mit seiner Öffnungen an den Scheitelpunkt 34 und damit an die Spitzen der entsprechende Zitze 2 zu führen.

Die Fig. 6 zeigt eine Möglichkeit zur vereinfachten Berechnung des Verkippungswinkels β, für einen Fall, bei dem die zugrunde liegenden 3D-Informationen über ein Triangulationsverfahren mithilfe einer projizierten Gitterlinie bestimmt werden. In der Figur sind 3D-Messpunkte 41 in einer Projektion auf die x'y'-Ebene der 2D-Abbildungen dargestellt. Zudem ist eine ermittelte Konturlinie 32 eingezeichnet. Die 3D-Messpunkte 41 sind mithilfe eines Projektors (vgl. Projektor 25 aus Fig. 2) generiert worden, der ein quadratisches Gittermuster projiziert. Entsprechend ist die Lage der Projektionsstrahlen zueinander bekannt.

In der Fig. 6 sind 3D-Messpunkte 41, die anhand von einer horizontalen Linie in Gittermuster des Projektors generiert sind, miteinander verbunden. Es entsteht so eine Linienschar, die durch Ellipsenabschnitte beschrieben werden kann. Beispielhaft ist ein solcher Ellipsenabschnitt mit dem Bezugszeichen 44 gekennzeichnet. Die Ellipsen resultieren aus Schnitten der Projektorstrahlen mit dem Rotationskörper, der das Objekt beschreibt. Bei Drehung um den korrekten Verkippungswinkel β stellen sich die Ellipsenabschnitte als Geradenabschnitte dar. Die zugrunde liegende Optimierungsaufgabe kann bei vorgegebener Form des Rotationskörpers in ein Differenzialgleichungssystem überführt werden, das ggf. analytisch gelöst werden kann. Auf diese Weise kann eine genaue und besonders schnelle Auswertung der 3D-Informationen erfolgen.

### Bezugszeichenliste

- 1: Euter
- 2: Zitze

- 10: Melkeinrichtung
- 11: Aktuator
- 12: Tragarm
- 13: Melkzeug
- 14: Milchsammler
- 15: Milchschlauch
- 16: weiterer Aktuator
- 17: Melkbecher
- 18: Verfahrweg

- 20: Vorrichtung
- 21: Bildverarbeitungs- und Steuereinrichtung
- 22: Steuerausgang
- 23: Datenanschluss
- 24 a, b: Kamera
- 25: Projektor

- 30: ermittelte Konturpunkte
- 31: vermutete Konturpunkte
- 32: ermittelte Konturlinie
- 32b: ermittelte Konturlinie (Backlight)
- 32f: ermittelte Konturlinie (Frontlight)
- 33: berechnete Konturlinie
- 34: Extremum
- 35: Hauptachse

- 40: ausgewählter Bereich
- 41: 3D-Messpunkt
- 42: Bereichsgrenze
- 43: Schwerpunkt der 3D-Messpunke
- 44: Ellipsenabschnitt

- x', y': Bildkoordinaten
- z': Abstand Kamera-Messpunkt

- x, y, z: Objektkoordinaten

## Patentansprüche

1. Verfahren zur optischen Bestimmung der Position und/oder Orientierung einer Zitze (2) eines milchgebenden Tiers im Raum anhand von Abbildungen mindestens einer Kamera (24a, 24b), bei dem
- mindestens eine 2D-Abbildung der Zitze (2) aufgenommen wird und eine Konturlinie (32, 32b, 32f) als 2D-Konturinformationen aus der Abbildung extrahiert werden;
- zu der ermittelten Konturlinie (32, 32b, 32f) eine Modell-Konturlinie (33) berechnet wird;
- basierend auf der Modell-Konturlinie (33) zumindest ein Bereich (40) der Zitze (2) bestimmt wird;
- Erzeugen von 3D-Informationen aus der mindestens einen 2D-Abbildung oder aus mindestens einer weiteren 2D-Abbildung und
- Auswählen einer Teilmenge der 3D-Informationen, die innerhalb des bestimmten Bereichs (40) der Zitze (2) liegt und
- Bestimmen einer Position und/oder Orientierung der Zitze (2) anhand der ausgewählten Teilmenge der 3D-Informationen, wobei eine Oberflächenkontur der Zitze (2) durch einen Rotationskörper der Modell-Konturlinie (33) beschrieben wird und die Position und/oder Orientierung des Rotationskörpers im Raum so variiert wird, dass die gemessenen 3D-Informationen aus dem ausgewählten Bereich (40) in Summe möglichst nah an einer Mantelfläche des Rotationskörpers liegen.

2. Verfahren nach Anspruch 1, bei dem die mindestens eine 2D-Abbildung bei einer Backlight-Beleuchtungssituation aufgenommen wird.

3. Verfahren nach Anspruch 1 oder 2, bei dem die 3D-Informationen aus 2D-Abbildungen von mindestens zwei beabstandeten Kameras (24a, 24b) stereoskopisch gewonnen werden.

4. Verfahren nach einem der Ansprüche 1 bis 3, bei dem die 3D-Informationen aus 2D-Abbildungen der mindestens einen Kamera (24a, 24b) bei Beleuchtung der Zitze (2) durch einen Projektor (25) zur Projektion eines Musters gewonnen wird.

5. Verfahren nach Anspruch 4, bei dem ein Linien-, Gitter-, Punkt- oder 2D-Positionscode-Muster verwendet wird.

6. Verfahren nach einem der Ansprüche 1 bis 3, bei dem die 3D-Informationen anhand einer Licht-Laufzeitmessung gewonnen werden.

7. Vorrichtung zur optischen Bestimmung der Position und Orientierung einer Zitze (2) eines milchgebenden Tiers im Raum mit mindestens einer Kamera (24a, 24b), **dadurch gekennzeichnet, dass** die Vorrichtung zur Durchführung eines Verfahrens gemäß einem der Ansprüche 1 bis 6 eingerichtet ist.

8. Vorrichtung gemäß Anspruch 7, aufweisend mindestens zwei beabstandete Kameras (24a, 24b).

9. Vorrichtung gemäß Anspruch 7 oder 8, weiter aufweisend mindestens einen Projektor (25) zur Projektion eines Linien-, Gitter-, Punkt- oder 2D-Positionscode-Musters.

## Claims

1. A method for optically determining the position and/or orientation of a teat (2) of a dairy animal in space on the basis of images from at least one camera (24a, 24b), in which
- at least one 2D image of the teat (2) is recorded and a contour line (32, 32b, 32f) as 2D contour information is extracted from the image;
- a model contour line (33) is calculated in relation to the determined contour line (32, 32b, 32f);
- on the basis of the model contour line (33), at least one area (40) of the teat (2) is determined;
- generating 3D information from the at least one 2D image or from at least one further 2D image and
- selecting a portion of the 3D information that is situated within the determined area (40) of the teat (2) and
- determining a position and/or orientation of the teat (2) on the basis of the selected portion of the 3D information, wherein a surface contour of the teat (2) is formed by a body of revolution of the model contour line (33), and wherein the position and/or orientation of the body of rotation in space is varied such that the measured 3D information from the selected area (40) is in total situated as close as possible to a lateral surface of the body of revolution.

2. The method according to claim 1, in which the at least one 2D image is recorded in a backlight lighting situation.

3. The method according to claim 1 or 2, in which the 3D information is obtained stereoscopically from 2D images from at least two spaced-apart cameras (24a, 24b).

4. The method according to one of claims 1 to 3, in which the 3D information is obtained from 2D images from the at least one camera (24a, 24b) when the teat (2) is lit up by a projector (25) for the projection of a pattern.

5. The method according to claim 4, in which a line, grid, point or 2D position-code pattern is used.

6. The method according to one of claims 1 to 3, in which the 3D information is obtained on the basis of an optical time-of-flight measurement.

7. A device for optically determining the position and orientation of a teat (2) of a dairy animal in space with at least one camera (24a, 24b), **characterized in that** the device is designed for carrying out a method as claimed in one of claims 1 to 6.

8. The device according to claim 7, having at least two spaced-apart cameras (24a, 24b).

9. The device accordiong to claim 7 or 8, further having at least one projector (25) for the projection of a line, grid, point or 2D position-code pattern.

## Revendications

1. Procédé pour la détermination optique de la position et/ou de l'orientation dans l'espace d'un pis (2) d'un animal donnant du lait à l'aide d'images acquises par au moins une caméra (24a, 24b), dans lequel
- au moins une image 2D du pis (2) est acquise et une ligne de contour (32, 32b, 32f) est extraite de l'image sous forme d'informations de contour 2D ;
- une ligne de contour de modèle (33) est calculée pour la ligne de contour (32, 32b, 32f) déterminée ;
- au moins une zone (40) du pis (2) est déterminée sur la base de la ligne de contour de modèle (33) ;
- des informations 3D sont générées à partir de l'au moins une image 2D ou d'au moins une autre image 2D et
- un sous-ensemble des informations 3D situé dans une certaine zone (40) du pis (2) est sélectionné et
- une position et/ou orientation du pis (2) est déterminée à l'aide du sous-ensemble des informations 3D sélectionné, un contour de surface du pis (2) étant décrit par un corps de révolution de la ligne de contour de modèle (33) et la position et/ou l'orientation du corps de révolution dans l'espace étant modifiées de telle manière que la somme des informations 3D mesurées dans la zone (40) sélectionnée se rapproche le plus possible d'une surface d'enveloppe du corps de révolution.

2. Procédé selon la revendication 1, dans lequel l'au moins une image 2D est acquise dans une situation de rétroéclairage.

3. Procédé selon la revendication 1 ou 2, dans lequel les informations 3D sont tirées de façon stéréoscopique des images 2D d'au moins deux caméras (24a, 24b) écartées.

4. Procédé selon l'une des revendications 1 à 3, dans lequel les informations 3D sont tirées d'images 2D de l'au moins une caméra (24a, 24b) alors que le pis (2) est éclairé par un projecteur (25) de façon à projeter un motif.

5. Procédé selon la revendication 4, dans lequel le motif utilisé est un motif de lignes, de quadrillage, de points ou de code de position 2D.

6. Procédé selon l'une des revendications 1 à 3, dans lequel les informations 3D sont obtenues à l'aide d'une mesure du temps de parcours de la lumière.

7. Dispositif pour la détermination optique de la position et/ou de l'orientation dans l'espace d'un pis (2) d'un animal donnant du lait à l'aide d'au moins une caméra (24a, 24b), **caractérisé en ce que** le dispositif est configuré en vue de la mise en œuvre d'un procédé selon l'une des revendications 1 à 6.

8. Dispositif selon la revendication 7, comportant au moins deux caméras (24a, 24b) écartées.

9. Dispositif selon la revendication 7 ou 8, comportant en outre au moins un projecteur (25) pour la projection d'un motif de lignes, de quadrillage, de points ou de code de position 2D.
